# EUROPÄISCHE PATENTSCHRIFT

(11) **EP 0 585 744 B1**
(45) Veröffentlichungstag und Bekanntmachung des Hinweises auf die Patenterteilung: **12.11.1997**
(21) Anmeldenummer: 93113266.6
(22) Anmeldetag: 19.08.1993
(51) Int. Cl.: G01N 21/77

(54) **Licht leitendes Analyseelement zur Bestimmung eines Analyts**
Light guiding analytical element for determination of an analyte
Elément d'analyse guidant la lumière pour déterminer un analyte

(30) Priorität: 21.08.1992 DE 4227678
(43) Veröffentlichungstag der Anmeldung: 09.03.1994
(73) Patentinhaber: BOEHRINGER MANNHEIM GMBH, 68305 Mannheim (DE)
(72) Erfinder: Lange, Hanse, D-68623 Lampertheim (DE); Harttig, Herbert, Dr., D-67122 Altrip (DE); Macho, Heinz, D-64658 Fürth (DE)

(56) Entgegenhaltungen:
- EP-A- 0 234 928
- EP-A- 0 409 033
- EP-A- 0 413 499
- DE-A- 3 617 763

## Beschreibung

Die Erfindung betrifft ein Analyseelement zur Bestimmung eines Analyts in Form eines Licht leitendes Stiftes mit einer Mantelfläche und zwei im wesentlichen parallelen Stirnflächen, wobei eine der Stirnflächen mit Reagenz beschichtet ist, das in Anwesenheit des Analyts eine optisch detektierbare Reaktion eingeht, sowie ein Verfahren zur Herstellung eines solchen Analyseelements und ein Verfahren zur Bestimmung eines Analyts in einer Probe mittels eines solchen Analyseelements.

Kommerziell erhältliche Analyseelemente zum Nachweis von Bestandteilen in Flüssigkeiten, vor allem Körperflüssigkeiten wie Blut, Plasma, Serum, Urin oder Speichel bestehen zur Zeit meist aus einem mehr oder weniger flachen, inerten Trägermaterial auf dem schichtenförmig Testfelder aufgebracht sind. Die Testfelder sind mehr- oder einschichtig und liegen vor allem in Form von Streifen oder rechteckigen oder quadratischen Plättchen vor. Beispiele für solche Analyseelemente sind aus EP-A-0 045 476, EP-A-0 262 445 oder EP-A-0 256 806 bekannt. Testfelder, die normalerweise in der Größenordnung von 0,5 x 0,5 cm bis 2 x 2 cm liegen und die die zum Nachweis eines Analyts erforderlichen Reagenzien enthalten, werden mit der zu untersuchenden Probe kontaktiert. Auf dem Testfeld ergibt sich dann bei Anwesenheit des zu bestimmenden Analyts eine detektierbare Reaktion, die ein Maß für Art und/oder Menge des Analyts darstellt. Solche Teste, insbesondere mehrschichtige, sind relativ kompliziert herzustellen da die einzelnen Testfeldschichten in Form großer flächiger Gebilde gefertigt und dann in die Form von Streifen oder Quadraten zurecht geschnitten werden, bevor sie schließlich zu einem Analyseelement zusammenmontiert werden. Grundsätzlich weisen solche Analyseelemente nur ein begrenztes Miniaturisierungspotential zur Untersuchung möglichst geringer Probenvolumina auf. Schließlich ist es nicht oder nur sehr eingeschränkt möglich, solche Analyseelemente während des Herstellungsprozesses mit einfachen Methoden zu überprüfen. Speziell bei den aus verschiedenen Werkstoffen montierten Analyseelementen ist es sehr aufwendig in-Prozeß-Kontrollen durchzuführen.

Eine andere Form trockenchemischer Analyseelemente stellen faseroptische Sensoren dar. Dabei werden in der Regel eine oder mehrere Lichtleitfasern aus Glas oder Kunststoff eingesetzt. Faseroptische Analyseelemente sind beispielsweise aus DE-A-3701833 bekannt. Eine Faser oder ein Bündel von Fasern aus dünnen Quarzlichtleitern trägt an ihrem einen Ende ein Enzymsubstrat, das in Anwesenheit des zu bestimmenden Analyts eine Änderung einer spektralen Eigenschaft erfährt, die über den Lichtleiter erfaßt wird und zur Bestimmung der Enzymaktivität herangezogen wird. Beispielsweise wird hierfür rückgestreutes Anregungslicht gemessen. Die beschriebenen Fasern sind ca. 200 µm dick.

In DE-A-3617763 ist ein Lichtleiter beschrieben, der in einer bevorzugten Ausführungsform aus einer oder mehreren optischen Fasern besteht, die auf der Oberfläche eines ersten Endes (erste Stirnfläche) Antikörper fixiert enthalten, welche mit zu bestimmendem Antigen in der Probe reagieren. Die Messung erfolgt mittels Licht, das auf das zweite Ende (zweite Stirnfläche) der optischen Fasern auftrifft, durch die Fasern geleitet wird und auf die erste Stirnfläche der Lichtleitfasern trifft. Mit Hilfe durch dieses Ende hindurchgehenden Lichts ist es möglich, das in der Probe enthaltende Antigen zu bestimmen. Ebenso wird auch die Auswertung des durch die Faser an die erste Stirnfläche geleiteten und dort reflektierten Lichtes beschrieben.

Die bisher bekannten faseroptischen Sensoren sind schwierig zu handhaben. Sehr nachteilig ist insbesondere die schwierige Positionierbarkeit der Lichtleiter bezüglich der Licht sendenden und Licht empfangenden Elemente innerhalb des Meßgerätes. Hierbei kommt es auf einen definierten Winkel an, mit dem das Licht auf die Licht einkoppelnde Stirnfläche trifft und ebenso auf den Winkel mit dem das Licht aus dem Lichtleiter kommend auf das Licht empfangende Element trifft. Zur Vermeidung eines großen Variationskoeffizienten beim Vergleich der Meßergebnisse, die bei der Verwendung mehrerer Licht leitender Analyseelemente im gleichen Meßgerät erhalten werden, sind sehr aufwendige Justierungen der Lichtleiter notwendig. Um die exakte und vergleichbare Ein- und Auskopplung von Licht zu ermöglichen sind bisher aufwendige Adapter für Lichtleitfasern erforderlich. Die Bohrung des Adapters mit dem die Lichtleitfaser in einer definierten Position gehalten wird, muß dem Durchmesser und der Querschnittsform der eingesetzten Lichtleitfaser möglichst gut angepaßt sein, damit möglichst wenig Spiel zwischen Lichtleitfaser und Bohrung bleibt. In solchen Adaptern werden die glatten, zylindrischen Lichtleitfasern des Standes der Technik durch am Adapter angebrachte Schrauben in der gewünschten Position befestigt und justiert. Bisher ist es deshalb sehr aufwendig, Lichtleitfasern in einem Adapter auszutauschen. Adapter und Licht leitendes Analyseelement werden in der Praxis wegen ihrer gegenseitigen genauen Anpassung als Einheit aufgefaßt, die nicht getrennt wird. Schnelle, kostengünstige Reihenuntersuchungen und Untersuchungen, die auch von ungeschultem Personal durchgeführt werden können, waren mit den bisher bekannten Licht leitenden Analyseelementen deshalb bisher nicht möglich.

Die Aufgabe bestand darin, einfach und als Massenprodukt herstellbare, leicht handhabbare und einfach zu justierende Licht leitende Analyseelemente zur Bestimmung eines Analyts zur Verfügung zu stellen. Diese Aufgabe wird durch den Gegenstand der Erfindung, wie er in den Patentansprüchen gekennzeichnet ist, gelöst.

Gegenstand der Erfindung ist ein Analyseelement zur Bestimmung eines Analyts in Form eines Licht leitenden Stiftes mit einer Mantelfläche und mit zwei im wesentlichen parallelen Stirnflächen, wobei eine der Stirnflächen Reagenz trägt, das in Anwesenheit des Analyts eine optisch detektierbare Reaktion eingeht, und wobei die Mantelfläche ein herausragendes Element aufweist.

Gegenstand der Erfindung ist auch ein Verfahren zur Herstellung eines solchen Analyseelementes, wobei der Stift aus Kunststoff mittels Spritzguß erzeugt, Reagenz auf eine der Stirnflächen aufgebracht und abschließend erforderlichenfalls getrocknet wird.

Außerdem ist Gegenstand der Erfindung ein Verfahren zur Bestimmung eines Analyts in einer flüssigen Probe mittels eines wie vorstehend charakterisierten Analyseelements, wobei die Reagenz tragende Stirnfläche des Licht leitenden Stiftes mit der zu untersuchenden Probe kontaktiert und eine optische Veränderung als Maß für Art und/ oder Menge des Analyts durch die kein Reagenz tragende Stirnfläche des Licht leitenden Stiftes gemessen wird.

Das erfindungsgemäße Analyseelement ist ein Stäbchen aus einem transparenten Material, das zwei im wesentlichen parallele Stirnflächen aufweist. "Im wesentlichen parallel" bedeutet hierbei eine Abweichung von weniger als 1°. Bevorzugt sind zwei ebene parallele Stirnflächen. Ganz besonders bevorzugt sind ebene parallele Stirnflächen, die senkrecht zur Längsachse des Stäbchens angeordnet sind. Auf der Mantelfläche, d. h. der Oberfläche des Analyseelementes mit Ausnahme der beiden Stirnflächen, befindet sich ein Vorsprung als herausragendes Element. Dieser Vorsprung kann die Gestalt beispielsweise eines Stiftes, eines Dorns, eines Noppen, oder einer Finne besitzen. Eine Finne, das heißt, eine dünne plättchen- oder flügelförmige Struktur, die mit einer ihrer dünnen Seiten auf der Mantelfläche des erfindungsgemäßen Analyseelements aufsitzt, ist besonders bevorzugt. Die erfindungsgemäße aus der Mantelfläche des transparenten Stiftes austretende Struktur erhebt sich um etwa 1 bis 250 % des maximalen Durchmessers (ohne Vorsprung) des Stiftes,vorzugsweise 5 bis 50 %.

Der Querschnitt des Stäbchens kann rund, elliptisch, eckig, rechteckig, quadratisch, knochenförmig, hantelförmig oder sonstwie beliebig symmetrisch oder asymmetrisch gestaltet sein. Die erfindungsgemäßen Analyseelemente weisen eine Querschnittsfläche von mehr als 0,1 mm² auf. Vorzugsweise beträgt die Querschnittsfläche etwa 1 - 20 mm². Der Abstand zwischen den beiden Stirnflächen des Licht leitenden Stiftes beträgt etwa 2 - 100 mm, vorzugsweise 3 - 30 mm. Querschnittsfläche und Länge des Stiftes sind dabei nach oben grundsätzlich nicht beschränkt. Die hier angegebenen oberen und unteren Grenzen ergeben sich aus praktischen und wirtschaftlichen Überlegungen.

Bevorzugte Analyseelemente haben, wenn man den Vorsprung außer Betracht läßt, die Form eines Zylinders oder eines Kegelstumpfes. Der Längsschnitt durch den Stift und beide Stirnflächen kann deshalb quadratisch, rechteckig oder trapezförmig sein.

Als Material für den transparenten Stift eignet sich grundsätzlich jedes Licht leitende Material. Optisch klarer Kunststoff hat sich besonders bewährt. Als mögliche Kunststoffe sind zu nennen Polypropylen, Polymethylmethacrylat, Polycarbonat, Polyamid, Polystyrol, Celluloseacetat oder Polyester. Besonders bevorzugt wird Polymethylmethacrylat oder Polycarbonat, als Stiftmaterial verwendet.

Als Licht im Sinne der Erfindung werden alle elektromagnetischen Wellen angesehen, insbesondere jedoch die im sichtbaren, UV und IR-Bereich. Licht im sichtbaren Wellenlängenbereich ist ganz besonders bevorzugt.

Lichtleitung innerhalb eines Materials erfolgt dann, wenn der Brechungsindex dieses Materials größer ist als der Brechungsindex der Umgebung und der Lichteinfallswinkel die Bedingungen der Totalreflexion erfüllt. Um die Lichtleitung zu verbessern, kann auch die Mantelfläche des erfindungsgemäßen Analyseelements vollständig oder teilweise durch eine dünne Metallschicht verspiegelt sein. Hierdurch kann der Lichteinfallswinkel freier wählbar sein, weil so gegebenenfalls Lichtleitung auch ohne die Bedingungen für Totalreflexion möglich sind. Zur Metallisierung eignen sich insbesondere Aluminium oder Silber.

Eine der Stirnflächen des erfindungsgemäßen Analyseelements trägt ein Reagenz, das in Anwesenheit des Analyts eine optisch detektierbare Reaktion eingeht. Optisch detektierbare Reaktionen sind insbesondere solche, die kolorimetrisch oder fluorimetrisch bestimmt werden können. Erfindungsgemäß verwendbar sind Reagenzschichten, wie sie aus dem Stand der Technik für Analyseelemente bekannt sind. So sind hierfür insbesondere solche Reagenzzusammensetzungen einsetzbar, die so viskos sind, daß sie mit einem Rakel aufgebracht werden können, oder die so beschaffen sind, daß sie durch Tauchen, Siebdrucken, Aufsprühen oder Applizieren einzelner Tropfen und anschließendes Trocknen erzeugt werden können. Es ist auch möglich, Matrixmaterialien, wie Vliese, Gewebe, Folien oder Membranen, die das für die Bestimmung eines Analyts notwendige Reagenz enthalten auf die Stirnfläche des erfindungsgemäßen Analyseelements als Reagenzschicht aufzubringen. Solche Schichten oder die zuerst genannten "reinen" Reagenzschichten können durch Haftvermittler, wie beispielsweise Propiofan auf einer Stirnfläche des erfindungsgemäßen Analyseelements befestigt sein. Außerdem sind auch mehrschichtige Reagenzaufbauten, wie sie ebenfalls bereits aus dem Stand der Technik bekannt sind möglich. Eine oder mehrere der an den Reagenzaufbauten beteiligten Schichten kann Pigmente enthalten. Bevorzugt ist der Einsatz reflektierender Teilchen, wie beispielsweise Titandioxid, die gleichmäßig in der Reagenzschicht verteilt sind. Besonders bevorzugt ist der Einsatz einer speziellen reflektierenden Schicht, die es ermöglicht, daß durch das Licht leitende Stäbchen eingestrahltes Licht durch die Reagenzschicht gelangt und anschließend durch den Lichtleiter zurückreflektiert wird. Als reflektierende Schicht kann hier eine Schicht mit reflektierenden Partikeln, wie beispielsweise Titandioxid verwendet werden. Es kann aber auch eine sehr dünne Schicht aufgedampften Metalls, wie beispielsweise Silber oder Aluminium verwendet werden. Ganz besonders bevorzugt ist der Einsatz von reflektierenden Teilchen in der Reagenzschicht und die Überlagerung der Reagenzschicht mit einer dünnen Metallschicht, die Licht reflektiert, aber so dünn ist, daß Flüssigkeit durch sie hindurch auf die Reagenzschicht zu gelangen vermag.

Die Formulierung "im wesentlichen parallele Stirnflächen" soll auch die Möglichkeit mit einschließen, daß eine der Stirnflächen des Licht leitenden Stiftes muldenförmig ausgestaltet ist, solange die Mulde eine im wesentlichen parallel zu der anderen Stirnfläche verlaufende Bodenfläche aufweist. Solche Mulden, die zur Reagenzaufnahme besonders geeignet sind, können 20 - 1000 µm, vorzugweise 30 - 200 µm tief sein. In bevorzugten Ausführungsformen ist die Muldentiefe < 30 % des Durchmessers des Stäbchens. Entsprechende Ausführungsformen sind beispielsweise bereits aus EP-A-0 234 928 bekannt.

Während eine Stirnfläche des erfindungsgemäßen Analyseelements ein für die Bestimmung eines Analyts erforderliches Reagenz trägt, ist die gegenüberliegende Stirnfläche reagenzfrei. Durch sie wird Licht eingestrahlt oder eingekoppelt, weshalb diese Fläche auch "Koppelfläche" genannt wird. Gegebenenfalls kann diese Koppelfläche mit einer transparenten Polymerschicht belegt sein, die vom Stäbchenmaterial verschieden ist.

Das erfindungsgemäß aus der Mantelfläche des Analyseelementes herausragende Teil kann sich an jeder Stelle der Mantelfläche befinden. Bevorzugt ist jedoch seine Anordnung in der von der Reagenz tragenden Stirnfläche entfernteren Hälfte des Mantels. Besonders bevorzugt ist eine solche Anordnung des vorspringenden Teils, daß es mit der reagenzfreien Stirnfläche (Koppelfläche) abschließt. Die mit der Mantelfläche verbundene Grundfläche des herausragenden Teils beträgt vorzugsweise weniger als 10 %, in besonders vorteilhaften Ausführungsformen weniger als 5 % der Mantelfläche.

Im Falle eines dünnen, plättchenartigen aus der Mantelfläche vorspringenden Elementes ist dieses Teil vorzugsweise so angeordnet, daß sich die Berührungsfläche zwischen Mantelfläche und plättchenartigem Vorsprung im Lot mit der Längsachse des erfindungsgemäßen Analyseelementes befindet, die Länge der Berührungsfläche jedoch nicht größer als ein Drittel der Längsachse ist.

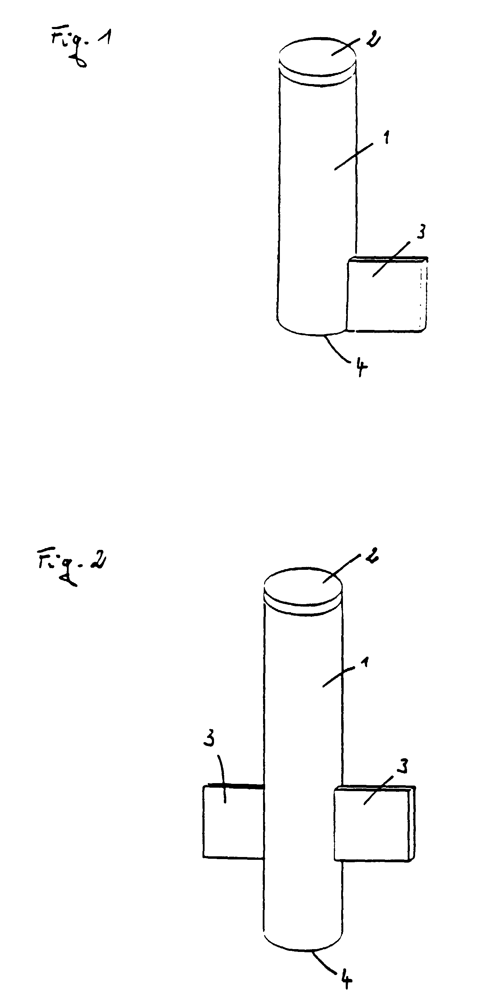

Ein solches vorteilhaftes erfindungsgemäßes Analyseelement ist in Fig. 1 dargestellt. Ein Licht leitender Stift (1) trägt eine Reagenzschicht (2) und ein vorspringendes Teil in Form einer Finne (3). Die Koppelfläche (4) durch die Licht eingestrahlt wird, befindet sich der Reagenzschicht (2) gegenüber. Erfindungsgemäße Analyseelemente können auch mehrere vorspringende Teile auf der Mantelfläche aufweisen. Vorteilhafterweise sind bei solchen Ausführungsformen die Vorsprungselemente jeweils auf einander gegenüberliegenden Stellen der Mantelfläche angeordnet. Ein solches Analyseelement ist in Fig. 2 gezeigt. Hier ist ein erfindungsgemäßes Analyseelement dargestellt, das sich dadurch von dem in Figur 1 skizzierten Analyseelement unterscheidet, daß es zwei als Finnen ausgebildete Erhebungen (3) auf der Mantelfläche des Licht leitenden Stiftes (1) besitzt.

Licht leitende Stifte für erfindungsgemäße Analyseelemente können je nach Material unterschiedlich hergestellt werden. Vorzugsweise werden Licht leitende Stifte aus transparentem, optisch klarem Kunststoff eingesetzt. Die Herstellung solcher Stifte erfolgt vorteilhafterweise durch Spritzguß, wobei der Vorsprung auf der Mantelfläche des Stiftes in die Spritzgußform miteinbezogen ist. Ganz besonders vorteilhaft befindet sich dieses erhabene Teil in der Angußöffnung der Spritzgußform. Es ist klar, daß für das Spritzgußverfahren nur solche Materialien verwendet werden können, die in der Wärme schmelzbar sind. Vorteilhafterweise werden deshalb thermoplastische Kunststoffe eingesetzt.

In der Regel ist es nicht notwenig, bei spritzgegossenen, Licht leitenden Stiften die Stirnflächen zu polieren. Gegebenenfalls kann eine solche Politur jedoch an den spritzgegossenen Stücken erfolgen.

Für durch Spritzguß hergestellte erfindungsgemäße Analyseelemente hat es sich als besonders vorteilhaft erwiesen, wenn das Stäbchen die Form eines Kegelstumpfes aufweist, da ein solchermaßen geformtes Teil besonders leicht aus der Spritzgußform zu entfernen ist. Eine Entformschräge von bis zu 1° hat sich als bevorzugt erwiesen. In der Regel ist die kleinere Stirnfläche solcher Analyseelemente dann diejenige die das Reagenz trägt.

Die Beschichtung der Mantelfläche mit Licht reflektierendem Material erfolgt beispielsweise durch Tauchen oder Aufsprühen entsprechender Lösungen oder Suspensionen reflektierender Materialien oder durch Aufdampfen oder Sputtern, wenn metallische Schichten erzeugt werden sollen. Vor der Beschichtung der Mantelfläche können die Stirnflächen, zumindest die reagenzfreie Stirnfläche abgedeckt werden oder sie können nach dem Beschichtungsverfahren durch Entfernen (Abschneiden, Abpolieren) einer dünnen Schicht erzeugt werden.

Das Aufbringen des Reagenzes auf eine der Stirnflächen des lichtleitenden Stiftes kann vor oder nach der Beschichtung der Mantelfläche mit Licht reflektierendem Material erfolgen. Gegebenenfalls kann das Aufbringen einer reflektierenden Schicht auf die Reagenzschicht kombiniert werden mit der Beschichtung der Mantelfläche mit reflektierendem Material. Im übrigen können die Reagenzien in Form von Lösungen oder Suspensionen nach bekannten Verfahren auf die Stirnflächen Licht leitender Stifte aufgebracht werden. Mögliche Verfahren sind hierbei das Tauchen, das Tauchen mit folgendem Schleudern, das Siebdrucken, das Aufsprühen und das Applizieren einzelner Tropfen. Die aufgebrachten Massen können Enzyme und Indikatoren enthalten, es ist aber auch denkbar, solche oder andere Reagenzbestandteile in weiteren Schritten einzubringen. Dies kann ebenfalls durch Tauchen, Tüpfeln, Ink-Jet etc. geschehen. Bei ausreichender Viskosität der Reagenzmasse ist es auch möglich, Schichten mit einem flexiblen Rakel aufzubringen. Dieses Verfahren ist vor allem dann anwendbar, wenn die das Reagenz aufnehmende Stirnfläche eine Mulde zur Aufnahme des Reagenzes enthält. Solche Mulden können durch Ausdrehen, Fräsen oder durch entsprechende Formgebung im Spritzgußverfahren gebildet werden.

Außerdem ist es auch möglich, separat fertiggestellte Reagenz enthaltende Schichten auf einer Stirnfläche des Licht leitenden Stiftes zu befestigen. Die Befestigung kann beispielsweise mittels Haftvermittlers, wie beispielsweise Propiofan erfolgen. Solche fertiggestellten Reagenz enthaltenden Schichten können Vliese, Gewebe, Folien oder Membranen sein, die Reagenz imprägniert und/oder als Beschichtung enthalten.

Nach dem direkten Aufbringen des Reagenzes als Lösung oder Suspension auf die eine Stirnfläche des Licht leitenden Stiftes wird in der Regel ein Trocknungsschritt nachgeschaltet. Die Temperaturen können hier je nach Reagenzzusammensetzung bis zu 70° C betragen.

Die Fertigung der erfindungsgemäßen Analyseelemente kann einzeln erfolgen. Es wird aber bevorzugt, die Fertigung anhand von Vielfachen eines einzelnen Analyseelements durchzuführen. Dazu werden beispielsweise in mehreren, sich entsprechenden, miteinander in Verbindung stehenden Spritzgußformen gleichzeitig Vielfache eines Einzelanalyseelementes gespritzt. Mit einer solchen Spritzgußform können beispielsweise Vielfache eines erfindungsgemäßen Analyseelementes hergestellt werden, die jeweils über einen Vorsprung auf der Mantelfläche mit dem Vorsprung auf der Mantelfläche eines anderen Licht leitenden Stiftes in Berührung stehen. Solche Strukturen können zwischen den Erhebungen so geteilt werden, daß einzelne Analyseelemente erzeugt werden. Auf diese Art und Weise ist eine Massenproduktion erfindungsgemäßer Analyseelemente billig und einfach möglich.

Bei dem erfindungsgemäßen Verfahren zur Bestimmung eines Analyts in einer Probe wird die mit Reagenz beschichtete Stirnfläche des Licht leitenden Stiftes mit der zu untersuchenden Probe kontaktiert. Vorzugsweise handelt es sich bei den zu untersuchenden Proben um flüssige Proben, vor allem um Körperflüssigkeiten, wie Blut, Plasma, Serum, Urin oder Speichel. Die zu untersuchende flüssige Probe kann auf die Reagenz tragende Stirnfläche des Analyseelementes aufgegeben oder das erfindungsgemäße Analyseelement kann mit der das Reagenz tragenden Stirnfläche in die zu untersuchende Flüssigkeit getaucht weren. Durch die reagenzfreie Stirnfläche des erfindungsgemäßen Analyseelementes wird Licht eingestrahlt, das mit dem Reagenz auf der gegenüberliegenden Stirnfläche wechselwirkt. Eine optische Veränderung stellt das Maß für Art und/oder Menge des Analyts dar und kann im reflektierten Licht durch die kein Reagenz tragende Stirnfläche des Licht leitenden Stiftes vermessen werden oder es kann auch das durch die Reagenzschicht hindurchgelangende Licht auf der Seite der Reagenz tragenden Stirnfläche gemessen werden. Ebenso sind Fluoreszenz- oder Lumineszenzmessungen möglich. Die Messung des reflektierten Lichts ist jedoch bevorzugt und kann nach Methoden erfolgen, die bereits als solche aus dem Stand der Technik bekannt sind.

Bei der bestimmungsgemäßen Anwendung des erfindungsgemäßen Analyseelementes zeigen sich die besonderen Vorteile. So ermöglicht der aus der Mantelfläche vorspringende Teil eine gute und sehr einfache Positionierung in einem Adapter mit bajonettartigem Verschluß, bei dem das Licht leitende Stäbchen eingesetzt und mit Hilfe des Vorsprungs eingedreht wird. Die Positionierung erfolgt mit Hilfe des Vorsprungs der als Anschlagelement dient. Insbesondere ist mittels des vorspringenden Elements die Entfernung der Koppelfläche von der Oberfläche des optischen Sendesystems sowie gegebenenfalls bei Reflexionsmessungen auch des Empfangsystems regulierbar. Insofern dient das vorspringende Teil als Halte- und als Positionierelement und ermöglicht damit einfach durchführbare, schnelle und reproduzierbare Messungen von Analyten in Flüssigkeiten.

Die Konstruktion der erfindungsgemäßen Analyseelemente bietet aufgrund der einfachen und schnellen Positionierbarkeit den Vorteil, daß während der Fertigung auch auf verschiedenen Fertigungsstufen die Präzision des Herstellungsverfahrens bestimmt werden kann. So kann die Güte des Naßschichtauftrags der Schicht oder der Schichten während des Fertigungsprozesses durch Messung der reflektiven und transmissiven Eigenschaft jeder Einzelschicht mittels 100 % Kontrolle durch die nicht mit Reagenz beschichtete Stirnfläche des lichtleitenden Stiftes erfolgen. Nach Trocknung kann durch on-line-Messung erneut die reflektive und transmissive Eigenschaft der getrockneten Schicht(en) zur Prozeßkontrolle erfolgen. Eine in-Prozeß-Kontrolle ist damit möglich.

Die Erfindung wird in den nachfolgenden Beispielen näher erläutert.

### Beispiel 1

Es wurden 5 Licht leitende Stifte gemäß Figur 1 aus Polymethylmethacrylat mit einem runden Querschnitt, einem Durchmesser von 3,05 mm und einer Länge von 30 mm per Spritzguß hergestellt, senkrecht zur Längsachse abgedreht und poliert. Die Stirnflächen waren senkrecht zur Längsachse. Eine der Stirnflächen wurde mit einer Läpp- und Poliermaschine (Typ Joke II-M, Fa. Joisten und Kettenbaum, Bergisch Gladbach, Deutschland) poliert.

Eine Farbstoffdispersion aus weißer Dispersionsfarbe und dunkelblauer Farbe wurden so zusammengemischt, daß visuell die Intensitäten
1. weiß
2. blaßblau
3. hellblau
4. mittelblau
5. dunkelblau
erhalten wurden. Ein Tropfen einer solchen Farbstoffdispersion wurde auf die polierte Stirnfläche gegeben und über Nacht bei Raumtemperatur getrocknet. Bei Einkopplung von Licht (λ = 660 nm) über eine Ulbricht'sche Kugel eines Remissionsphotometers durch die freie Stirnfläche des Analyseelements und Messung des remittierten Lichts ergab sich eine Abnahme des remittierten Lichtsignals, das dem optischen Eindruck entsprach.

### Beispiel 2

Analyseelemente gemäß Figur 2 wurden erhalten, indem ein spritzgegossener Stift aus Polymethylmethacrylat mit rundem Querschnitt, einem Durchmesser von 3,05 mm und einer Länge von 30 mm nach Politur einer Stirnfläche auf dieser Stirnfläche mit einer Reagenzmasse belegt wurde, die folgendermaßen hergestellt worden war:

| | |
|---|---|
| 2 %ige Lösung von Keltrol F (Xanthangum von Kelco, Brüssel, Belgien) in 0,2 m Citratpuffer, pH 5,0 | 2,7 g |
| 15 %ige Lösung von Nonlylsulfat in Wasser | 0,154 g |
| Wasser | 8,7 g |
| Polyvinylpyrrolidon | 0,3 g |
| Tartrazin | 0,05 g |
| Tetramethylammoniumchlorid | 0,129 g |
| wurden gemischt, | |
| | |
| N,N-Bishydroxyethyl-p-nitrosoanilin | 0,06 g |
| Wasser | 3,0 g |
| wurden gemischt und | |
| | |
| Propiofan 70 D (BASF, Ludwigshafen, BRD) | 3,5 g |
| Glucoseoxidase (184 U/mg) | 0,586 g |
| Wasser | 2,4 g |
| wurden gemischt | |

und anschließend die drei Mischungen vereinigt und bis zur Homogenität gerührt.

Die Reagenzschicht verfärbt sich in bekannter Weise durch Reaktion mit Glukose von hellgelb nach grün oder blau.

Nach dem Trocknen der Beschichtung (45° C, 60 Minuten) wurde die Schicht mit einem Tropfen wässriger Glukoselösung benetzt. Innerhalb weniger als 30 Sekunden färbte sich die Beschichtung blau.

Bei einem Test mit entsprechend hergestellten Analyseelementen und Glukoselösungen von unterschiedlichen Konzentrationen konnte nach dem Meßverfahren gemäß Beispiel 1 remissionsphotometrisch (λ = 660 nm) durch den Lichtleiter eine Kurve aufgenommen werden, die eine Abnahme der remittierten Lichtmenge mit zunehmender Glukosekonzentration widergibt.

### Beispiel 3

In Abänderung des Versuches nach Beispiel 2 wurde anstelle von wässrigen Glukoselösungen citratgepuffertes Vollblut mit unterschiedlichen Glukosekonzentrationen verwendet.

Durch die rote Blutfarbe wurde die Remission des eingestrahlten Lichtes (λ = 660 nm) so stark beeinflußt, daß eine akzeptable Messung der Blutglukose mit der eingestrahlten Meßwellenlänge nicht mehr möglich war.

Wurde eine Meßvorrichtung eingesetzt, welche abwechselnd bei einer Wellenlänge von 564 und 660 nm die Remission durch den Lichtleiter ermittelte, war es möglich, den Einfluß der roten Blutfarbe auf das Meßergebnis rechnerisch zu eliminieren und eine Kurve aufzunehmen, die eine Abnahme des Meßsignals mit zunehmender Glukosekonzentration im Blut wiedergibt.

### Beispiel 4

In Abänderung von Beispiel 2 wurden Analyseelemente gemäß Figur 2 hergestellt, bei denen auf eine Stirnfläche eine Reagenzmasse enthaltend Titandioxid, bestehend aus

| | |
|---|---|
| Keltrol F (Xanthangum von Kelco, Brüssel, Belgien) | 4,30 g |
| Titandioxid | 0,71 g |
| Natriumnonylsulfatlösung in Wasser (150 g/l) | 2,44 g |
| Polyvinylpyrrolidon | 0,47 g |
| Tartrazin | 0,08 g |
| Tetraethylammoniumchlorid | 0,20 g |
| 2,18-Phosphormolybdänsäure | 0,95 g |
| N,N-Bis-hydroxyethyl-p-nitrosoanilin | 0,09 g |
| Celatom (MW25, Eagle-Picher, Cincinatti, USA) | 9,97 g |
| Propiofan (BASF, Ludwigshafen, Deutschland) | 5,46 g |
| Glucoseoxidase (184U/mg) | 0,93 g |
| bidestilliertes Wasser | 24,39 g |

mittels Siebdruckverfahren aufgebracht war. Trocknung war bei 45° C, 60 Minuten lang erfolgt. Sowohl nach Benetzung der getrockneten Schichten mit wässrigen Glukoselösungen als auch mit citratgepufferten Vollblutproben mit unterschiedlichen Glukosekonzentrationen wurden remissionsphotometrisch (λ = 660 nm) durch den Lichtleiter Kurven erhalten, die eine Abnahme der remittierten Lichtmenge mit zunehmender Glukosekonzentration widerspiegeln.

### Beispiel 5

a)
   In Abänderung des Beispieles 2 wurde ein Analyseelement gemäß Figur 2 hergestellt, dessen eine Stirnfläche mit einer Reagenzmasse gemäß Beispiel 2 beschichtet und bei 45° C, 60 Minuten lang getrocknet worden war. Auf die Reagenzschicht war eine metallische Silberschicht von 60 - 80 nm Dicke nach dem Sputterverfahren aufgebracht worden.
   Bei Aufgabe verschiedener citratgepufferter Vollblutproben mit unterschiedlichen Glukosekonzentrationen konnte remissionsphotometrisch (λ = 660 nm) innerhalb weniger als 40 Sekunden durch den Lichtleiter ein stabiles Signal aufgenommen werden. So konnte eine Kurve erstellt werden, die eine stetige Abnahme der remittierten Lichtmenge mit zunehmender Glukosekonzentration im Blut widergibt.
b)
   Bei Ersatz der metallischen Silberschicht durch eine metallische Aluminiumschicht wurden nahezu identische Ergebnisse erhalten.

### Beispiel 6

In Abänderung des Beispiels 2 wurden Analyseelemente hergestellt, bei denen die Reagenzschicht in einer ersten Stufe nach dem Phaseninversionsverfahren aus einer organischen Lösung als poröse Membranschicht gebildet wurde, wobei Puffer und Indikator bereits enthalten waren und in einer zweiten Stufe mit den notwendigen Enzymen getränkt wurde.

Die Herstellung der Reagenzschicht erfolgte im einzelnen folgendermaßen:

| | |
|---|---|
| 7,9 g | Celluloseacetat Typ 27 Drexel's Crystal, (Fa. Courtauld Speciality Plastics, Derby, UK) wurden in |
| 79,0 g | Aceton p.a., (Merck, Darmstadt, Deutschland) |

in einem Dreihalskolben bei 50° C unter Rühren mit einem KPG-Blattrührer innerhalb 3 Stunden gelöst.

Durch Anlegen von Unterdruck von ca. 100 mbar wurde nach Abkühlung entgast. Unter langsamem Rühren wurden

| | |
|---|---|
| 0,04 g | Brij 56, (Polyoxyethylenmonocetylether der Fa. Serva, Heidelberg, Deutschland) |
| 0,2 g | Tetramethylbenzidin (Fa. Boehringer Mannheim GmbH, Mannheim, Deutschland) |
| 19,75 g | Isopropanol p.a. (Fa. Riedel de Haen, Seelze, Deutschland) in |
| 45,0 g | Wasser bidestilliert |

zugegeben bzw. zugetropft.

Auf die obere Stirnfläche eines spritzgegossenen Stiftes mit einer Länge von 30 mm und einem Durchmesser von 3,05 mm aus Polycarbonat wurden 2 µl der klaren Polymerlösung aufdosiert. Bei 21° C und 45 % relativer Feuchte erfolgt binnen 15 Minuten die Ausbildung einer Membranschicht durch Phaseninversion. Danach erfolgte Trocknung bei 50° C über 15 Minuten. Auf die trockene Membranschicht wurden 2 µl einer Lösung aus

| | |
|---|---|
| 9,5 mg | Glukoseoxidase (211,9 U/mg) (Fa. Boehringer Mannheim GmbH, Mannheim, Deutschland) |
| 54,7 mg | Peroxidase (2118 U/mg) (Fa. Boehringer Mannheim GmbH, Mannheim, Deutschland) |
| in | |
| 100 g | Wasser bidestilliert |

aufgetüpfelt. Nach 15 Minuten Trocknen bei 50°C im Trockenschrank wurden bei Testen mit Glukoselösungen entsprechend Beispiel 2 vergleichbare Ergebnisse erhalten.

### Beispiel 7

Analyseelemente gemäß Figur 2 wurden aus spritzgegossenen Stiften aus Polymethylmethacrylat mit einem runden Querschnitt, mit einem Durchmesser von 3,05 mm und einer Länge von 30 mm hergestellt. Auf einer Stirnfläche war eine zentrische Ausnehmung von 2,8 mm Durchmesser und 0,2 mm Tiefe ausgefräst. Eine Reagenzmasse gemäß Beispiel 4 wurde durch Aufrakeln mit einem Hartgummirakel in die Ausnehmung eingebracht und bei 50° C, 30 Minuten lang getrocknet. Anschließend wurde auf die Reagenzschicht a) eine metallische Silberschicht von 60 - 80 nm Dicke aufgesputtert beziehungsweise b) eine metallische Aluminiumschicht von 60 - 80 nm Dicke aufgedampft.

Bei Aufgabe von citratgepufferten Vollblutproben mit unterschiedlichen Glukosekonzentrationen wurden remissionsphotometrisch (λ = 660 nm) durch den Lichtleiter Ergebnisse erhalten, die mit den Resultaten aus Beispiel 5 vergleichbar sind, jedoch in ihren relativen Remissionswerten ca. 15 % höher liegen.

## Patentansprüche

1. Analyseelement zur Bestimmung eines Analyts in Form eines Licht leitenden Stäbchens (1) mit einer Mantelfläche und zwei im wesentlichen parallelen Stirnflächen (2, 4), wobei eine der Stirnflächen ein Reagenz (2) trägt, das in Anwesenheit des Analyts eine optisch detektierbare Reaktion eingeht, dadurch gekennzeichnet, daß die Mantelfläche mindestens einen Vorsprung (3) aufweist.

2. Analyseelement gemäß Anspruch 1, dadurch gekennzeichnet, daß die Mantelfläche des Licht leitenden Stäbchens (1) teilweise oder vollständig mit Licht reflektierendem Material bedeckt ist.

3. Analyseelement gemäß Anspruch 1, dadurch gekennzeichnet, daß der Vorsprung (3) die Form eines Dorns, eines Noppen oder einer Finne hat.

4. Analyseelement gemäß Anspruch 1 oder 3, dadurch gekennzeichnet, daß die Mantelfläche mehrere Vorsprünge (3) trägt.

5. Analyseelement gemäß einem der vorangehenden Ansprüche, dadurch gekennzeichnet, daß das Licht leitende Stäbchen (1) aus thermoplastischem Kunststoff besteht.

6. Analyseelement gemäß einem der vorangehenden Ansprüche, dadurch gekennzeichnet, daß die Reagenz tragende Stirnfläche des Licht leitenden Stäbchens eine zentrische Mulde im Stiftmaterial enthält, die eine Tiefe aufweist, die kleiner als 30 % des Durchmessers des Stäbchens ist und diese Mulde Reagenz enthält.

7. Verfahren zur Herstellung eines Analyseelements gemäß Anspruch 1, dadurch gekennzeichnet, daß der Stift aus thermoplastischem Kunststoff mittels Spritzguß erzeugt und Reagenz auf eine der Stirnflächen aufgebracht wird.

8. Verfahren gemäß Anspruch 7, dadurch gekennzeichnet, daß das Reagenz mittels Tauchen, Drucken, Sprühen, Tüpfeln oder Rakeln auf eine der Stirnflächen aufgebracht wird.

9. Verfahren zur Bestimmung eines Analyts in einer Probe mittels eines Analyseelements gemäß einem der Ansprüche 1 - 6, dadurch gekennzeichnet, daß die Reagenz tragende Stirnfläche des Licht leitenden Stäbchens mit der zu untersuchenden Probe kontaktiert und eine optische Veränderung als Maß für Art und/oder Menge des Analyts durch die Reagenz freie Stirnfläche des Licht leitenden Stäbchens gemessen wird.

10. Verwendung eines Analyseelementes gemäß einem der Ansprüche 1-6 zur Bestimmung eines Analyts in flüssiger Probe.

## Claims

1. Analysis element for the determination of an analyte in the form of a light-guiding pin (1) having a circumferential surface area and two essentially parallel front surfaces (2, 4) at both of its ends, with one of said surfaces carrying a reagent (2) which enters an optically detectable reaction in the presence of the analyte, characterized in that the circumferential surface area carries at least one projection (3).

2. Analysis element according to claim 1, characterized in that the circumferential surface area of the light-guiding pin (1) is partly or completely covered with a light reflecting material.

3. Analysis element according to claim 1, characterized in that the projection (3) has the form of a mandrel, a knob or a fin.

4. Analysis element according to claim 1, or 3, charactenzed in that the circumferential surface areas has several projections (3).

5. Analysis element according to one of the aforementioned claims, characterized in that the light guiding pin (1) is made of a thermoplastic material.

6. Analysis element according to one of the aforementioned claims, characterized in that the reagent-carrying front surface of the light guiding pin contains a centered recess provided in the pin material, said recess having a depth of less than 30% of the diameter of the pin and containing reagent.

7. Process for manufacturing an analysis element according to claim 1, characterized in that the pin made of thermoplastic material is produced by means of injection molding and in that reagent is applied onto one of the front surfaces.

8. Process according to claim 7, characterized in that the reagent is applied onto one of the front surfaces through immersion, printing, spraying, dot-spotting or spreading.

9. Process for the determination of an analyte in a sample with the aid of an analysis element according to one of the claims 1 - 6, characterized in that the reagent-carrying front surface of the light-guiding pin is brought into contact with the sample to be analyzed and the optical change, as a measure for the type and/or amount of analyte, is determined through the reagent-free front surface of the light guiding element.

10. Use of an analysis element according to one of the claims 1 - 6 for the determination of an analyte in a liquid sample.

## Revendications

1. Elément d'analyse pour déterminer un analyte sous forme d'une baguette (1) guidant la lumière, ayant une surface latérale et deux surfaces frontales (2,4) essentiellement parallèles, dans lequel une des surfaces frontales porte un réactif (2) qui, en présence de l'analyte, subit une réaction optiquement détectable, caractérisé en ce que la surface latérale comporte au moins une saillie (3).

2. Elément d'analyse selon la revendication 1, caractérisé en ce que la surface latérale de la baguette (1) guidant la lumière est recouverte partiellement ou entièrement d'une matière réfléchissant la lumière.

3. Elément d'analyse selon la revendication 1, caractérisé en ce que la saillie (3) a la forme d'une épine, d'un picot ou d'un aileron.

4. Elément d'analyse selon la revendication 1 ou 3, caractérisé en ce que la surface latérale possède plusieurs saillies (3).

5. Elément d'analyse selon l'une quelconque des revendications précédentes, caractérisé en ce que la baguette (1) guidant la lumière est constitué de matière thermoplastique.

6. Elément d'analyse selon l'une quelconque des revendications précédentes, caractérisé en ce que la surface frontale de la baguette guidant la lumière portant le réactif contient un creux central dans la matière d'extrémité présentant une profondeur qui est inférieure à 30% du diamètre de la baguette et ce creux contient un réactif.

7. Procédé de fabrication d'un élément d'analyse selon la revendication 1, caractérisé en ce que l'extrémité en matière thermoplastique est réalisée au moyen d'un moulage par injection et qu'un réactif est appliqué sur une des surfaces frontales.

8. Procédé selon la revendication 7, caractérisé en ce que le réactif est appliqué sur une des surfaces frontales au moyen d'un trempage, d'une impression, d'une pulvérisation, d'un tamponnage ou d'un couchage à la râcle.

9. Procédé de détermination d'un analyte dans un prélèvement au moyen d'un élément d'analyse selon l'une quelconque des revendications 1 à 6, caractérisé en ce que la surface frontale portant le réactif de la baguette guidant la lumière est en contact avec le prélèvement à analyser et en ce que l'on mesure une modification optique, en tant que grandeur de détermination du type et/ou de la quantité de l'analyte, apparaissant sur la surface frontale libre de la baguette guidant la lumière, modification optique due au réactif.

10. Utilisation d'un élément d'analyse selon l'une quelconque des revendications 1 à 6, pour la détermination d'un analyte dans un prélèvement liquide.
